Europäisches Patentamt

European Patent Office

Office européen des brevets

(11) Publication number: **0 329 275 B1**

# EUROPEAN PATENT SPECIFICATION

(45) Date of publication of patent specification: **17.08.94**    (51) Int. Cl.5: **C25C  1/20**

(21) Application number: **89300470.5**

(22) Date of filing: **18.01.89**

The file contains technical information submitted after the application was filed and not included in this specification

(54) **Method of recovering silver from photographic processing solution and apparatus therefor.**

(30) Priority: **20.01.88 JP 10072/88**
**10.03.88 JP 56968/88**

(43) Date of publication of application:
**23.08.89 Bulletin  89/34**

(45) Publication of the grant of the patent:
**17.08.94 Bulletin  94/33**

(84) Designated Contracting States:
**DE GB**

(56) References cited:
**EP-A- 0 171 478**
**EP-A- 0 183 602**
**GB-A- 1 550 705**
**US-A- 3 919 062**

**PATENT ABSTRACTS OF JAPAN, vol. 11, no. 202 (C-432)[2649], 30th June 1987; & JP-A-62 23 994**

(73) Proprietor: **KONICA CORPORATION**
**26-2, Nishishinjuku 1-chome,**
**Shinjuku-ku**
**Tokyo 160 (JP)**

(72) Inventor: **Takabayashi, Naoki**

**c/o Konica Corporation**
**1, Sakuramachi**
**Hino-shi Tokyo (JP)**
Inventor: **Koboshi, Shigeharu**
**c/o Konica Corporation**
**1, Sakuramachi**
**Hino-shi Tokyo (JP)**
Inventor: **Goto, Nobutaka**
**c/o Konica Corporation**
**1, Sakuramachi**
**Hino-shi Tokyo (JP)**
Inventor: **Makida, Yoshiyuki c/o Kamioka Mining &**
**Smelting Co., Ltd.**
**1-1 Oaza Shikama**
**Kamioka-cho**
**Yoshiki-gun Gifu-Ken (JP)**
Inventor: **Kawakami, Youji c/o Kamioka Mining &**
**Smelting Co., Ltd.**
**1-1 Oaza Shikama**
**Kamioka-cho**
**Yoshiki-gun Gifu-Ken (JP)**

EP 0 329 275 B1

(74) Representative: **Brock, Peter William et al**
**URQUHART-DYKES & LQRD**
**91 Wimpole Street**
**London W1M 8AH (GB)**

## Description

BACKGROUND OF THE INVENTION

This invention relates to a method of recovering silver from photographic processing solutions, and an apparatus for recovering silver, used in working this method. More particularly it is concerned with a method of recovering silver, that can recover silver from spent processing solutions through an electrolytic silver recovery means, and can concurrently recover silver and reuse the resulting processing solution without any difficulties from the viewpoint of photographic performances, and an apparatus therefor. This invention further relates to a method of recovering silver from spent processing solutions through an electrolytic means, that makes it possible to effectively recover silver even from spent processing solutions containing silver in such a low concentration of a silver content of, for example, 100 ppm or less.

To obtain an image by subjecting a light-sensitive silver halide photographic material to exposure to light followed by processing, a developing step and a fixing step are provided. Regarding, for example, light-sensitive color photographic materials, provided are the steps of color developing, fixing, and bleaching, or bleach-fixing that carries out bleaching and fixing in one step.

During this fixing or bleach-fixing step, silver halide in a light-sensitive photographic material is dissolved by silver halide solubilizing agents such as thiosulfate and thiocyanate, so that silver complex ions are greatly accumulated in its processing solution with progress of the processing. In other steps, as in the developing step, silver halide solubilizing agents such as sulfite ions and thiocyanate ions like those in the fixing or bleach-fixing step, or these silver complex ions are contained in or adhered to the light-sensitive photographic material and flow into the solution, so that silver complex ions are gradually accumulated with progress of the processing, though in a smaller quantity than that in the fixing step. Such accumulation of silver ions greatly lower the capability of processing solutions, and also brings about serious problems for a countermeasure to environmental pollution when the spent processing solutions are discarded. Hence it is desired to recover the silver ions in processing solutions from the viewpoints of regenerating the spent processing solutions, decreasing the environmental pollution when the spent processing solutions are discarded, and also recovering and reusing useful resources.

In addition, from the viewpoint of preventing environmental pollution or effectively utilizing resources, there is a trend that the feeding of replenishing solutions into processing tanks, which is carried out to prevent deterioration of the performances in continuous processing of light-sensitive photographic materials, is made under a low replenishment, in other words, the replenishing solutions are fed in an amount as small as possible per unit area. This causes the accumulation of silver ions in an excessive concentration.

Accordingly it is strongly desired to keep the silver ion concentration in the processing tanks to a low concentration while continuously recovering silver ions, for the purpose of bringing reaction to efficiently proceed and also for the purpose of preventing the flow-out of silver that may be caused when the silver is adhered on a light-sensitive photographic material and brought to subsequent processing steps. By the same token, it is strongly desired from the viewpoint of preventing environmental pollution or reusing resources, to regenerate the solutions from which the silver has been recovered and again use them as replenishing solutions.

Hitherto known as techniques for such removal of silver from processing solutions are a metal replacement method, which uses steel wool or aluminum wool utilizing the ionization tendency; a silver sulfide precipitation method, carried out under an alkaline condition; a reduction precipitation method, using hydrosulfite or the like; an ion exchange method, using ion exchange resins or chelate resins; and an electrolytic reduction method, utilizing electrolysis.

Incidentally, the metal replacement method, according to which iron, silver or aluminum are eluted and a precipitate of hydroxide is formed, makes it impossible to reuse spent processing solutions and also has the problem that it can not sufficiently decrease the silver concentration.

The silver sulfide precipitation method and the reduction precipitation method also require much labor and time to carry out the filtration for recovering silver precipitates, resulting in a large size of apparatus, and also require a filter, resulting in an increase in the apparatus cost or operation cost. Moreover, because of changes in the properties of processing solutions, it also is very difficult to reuse the processing solutions.

In the method using ion exchange resins or the like, the ion exchange resins themselves are so expensive and nonetheless the resin has so small a silver-complex adsorption capacity that such methods can not be advantageous from an economical viewpoint. Moreover, it is impossible to regenerate the ion exchange resins on which silver complexes have been adsorbed, and the resins are burnt as refuse, so that the ion exchange resins must be again packed in, thus also resulting in an increase in the apparatus cost or

EP 0 329 275 B1

operation cost. Therefore the ion exchange method is accompanied with a high initial cost and high running cost, and disadvantageous from the viewpoint of practical use.

In regard to the electrolytic process, the process itself has been known for a very long time, and a number of examples of the prior art can be seen, for example, in general remarks by M.L. Schreiber (J. of the SMPTE, 74, p.505, 1965).

In particular, a number of measures are seen in U.S. Patents No. 4,054,503, No. 2,292,314, No. 2,158,410, No. 3,840,455, No. 4,000,456 and No. 4,054,503, German Patents DP-10 93 561, DT-25 07 123, DT-27 29 567, No. 674,988 and No. 1,176,373, French Patent No. 813,483, and Italian Patents No. 439,945 and No. 421,922, which are directed to electrode boards, with an aim at an improvement in current efficiency; U.S. Patents No. 2,607,721, No. 1,962,306, No. 3,072,577, No. 1,900,893, No. 3,003,942, No. 1,959,531, and No. 1,866,761, which are directed to electrolytic apparatus; and U.S. Patent No. 2,110,930, and German Patents No. 712,003, No. 11 33 565 and No. 11 87 806, which are directed to the controlling of current density in electrolysis.

In addition, methods of efficiently recovering silver from bleach-fixing solutions are disclosed in Japanese Unexamined Patent Publication No. 18191/1973, U.S. Patent No. 4,036,715 and German Patent No. 252,814; methods of separating silver from cathode and anode using a diaphragm in electrolysis are disclosed in German Patents No. 26 07 043 and No. 25 32 018, Japanese Unexamined Patent Publications No. 26315/1977, No. 102724/1977 and No. 35534/1978, and Japanese Patent Publication No. 30167/1968; methods for automatic control by controlling electric currents are disclosed in detail in U.S. Patents No. 3,875,032, No. 3,925,184 and No. 4,006,071, as well as Japanese Unexamined Patent Publications No. 32869/1978 and No. 115723/1977, and French Patent No. 2,275,570. As to combination with methods for regeneration of processing solutions, a measure is seen as described in Japanese Unexamined Patent Publication No. 72227/1977.

To discuss a specific problem in the recovery of silver by electrolysis, the proportion of current density of silver (current efficiency) to the total current density under conditions where silver is deposited is in fact considerably low and also the total current (density) is not so large, and hence actually the silver is recovered at an unexpectedly low rate. An increase in ferrous silver aminopolycarboxylate ions thus formed has brought about the serious problems that it makes poor the reduction oxidation potential of processing solutions, finally not only resulting in a lowering of silver-bleaching (oxidizing) rate but also causing the reduction of color-forming dyes that form color photographic images, in other words, the formation of Leuco dyes, to cause the browning of dyes.

Oxidation of a color developing agent or sulfite takes place on the anode to raise the problem that tar or sulfate is accumulated owing to a polymer which is an oxidized product.

To prevent such problems as far as possible, measures have been hitherto taken to lower the current density by using a high speed rotating rotary cathode board system or using carbon fiber, which have been actually used.

In spite of these methods and a large number of measures mentioned above, they have been considered to involve difficulties because, in all of them, the electrolysis must be carried out at a low current density for a very long time in order to sufficiently lower the silver ion concentration in the processing solution and eliminate the problems that may arise during the processing, or the problems may arise such that silver oxide is formed or sludge is formed owing to an excessive accumulation of sulfate ions that is caused by oxidation of sulfite, so that, although the recovery of silver from processing solutions has been put into practical use, the problems as mentioned above may arise in reusing the processing solutions, thus giving serious troubles to light-sensitive photographic materials.

The method of recovering silver from spent processing solutions through an electrolytic means is hitherto known. In conventional electrolytic recovery techniques as exemplified by the recovery of silver using a flat board electrolytic cell, however, the recovery of silver becomes difficult any longer if silver concentration in a spent processing solution to be electrolyzed comes to 100 mg/lit. or less (about 100 ppm or less), and accordingly a further recovery of silver has had to be carried out according to the recovery method using ion exchange resins or the metal replacement method using a metal having a larger ionization tendency than silver. Alternatively, silver must be removed using the precipitation method. Thus, the electrolytic process hitherto used has been unable to recover silver from the spent processing solutions having a silver concentration of 100 ppm or less.

The silver in spent processing solutions is desired to be in a concentration as low as possible also for a countermeasure to the problem of environmental pollution, and, even if it is not recovered in a reusable form, it must be removed as completely as possible by employing, for example, a precipitation method that utilizes addition of chemicals.

4

The method of removing or recovering silver by adding chemicals results in a high running cost and is difficult to operate.

Japanese Unexamined Patent Publication No. 65218/1978 discloses an electrolytic process in which a fluidized bed is used, but this can not necessarily achieve a sufficient silver recovery. Japanese Unexamined Patent Publication No. 270752/1986 also discloses a technique employing another fluidized-bed electrolytic process, which is considered to enable recovery of silver until it comes to a reasonably low concentration, but this is insufficient to stably achieve silver recovery to the level that can well meet the regulation in the countries having a severe environmental regulation, as exemplified by U. S. A.

JP-A-62 23 994 describes an electrolytic recovery device for recovering noble metals, such as silver, from photographic processing solutions containing the metals. The use of fixed bed or fluidized bed electrodes are suggested to allow a high current to be used in a small volume. The flow of electrolyte through the device is intermittent, and electrolysis takes place when the flow is stopped.

US-A-3 919 062 describes apparatus for recovering metals electrolytically form solutions containing them. The apparatus uses a porous bed of electrically conductive particles disposed between primary electrodes to define a reaction zone and means for flowing electrolyte through the bed substantially parallel to the voltage gradient between the primary electrodes. Recovery of gold from solutions containing the metal as a complex cyanides is exemplified.

In recent years, development processing machines are miniatuarized with decentralization of the processing of light-sensitive color photographic materials, and, correlatively with the trend of simple and rapid processing as typified by one-bath bleach-fixing, the processing methods in these machines more increasingly tend to be directed toward a decrease in the quantity of spent processing solutions because of omission of washing steps and low replenishment of processing solutions, and, under existing conditions, put greater apprehensions than ever for the influence of the accumulation of silver complex ions against the processing capability.

Therefore what is strongly sought is the advent of a silver recovery method, and an apparatus therefor, that can decrease silver ion concentration in a short time, can decrease it to a concentration required for photographic processing or environmental regulation even when the processing is continuously carried out, and particularly can recover in a high efficiency and high recovery the silver components contained in a trace amount of 100 ppm or less, while making the most of the advantages in the above conventional electrolytic processes.

SUMMARY OF THE INVENTION

This invention was made on account of the above points, and a first object of this invention is to provide a technique that enables recovery of silver from a spent processing solution in a high efficiency and high recovery according to an electrolytic process.

A second object of this invention is to provide an economically advantageous technique that enables recovery of silver in a short time from a large quantity of spent photographic processing solution with use of a small-sized apparatus and at a low cost.

A third object of this invention is to provide a method for the recovery of silver that enables stable recovery of silver until it comes to a very low concentration by improving the electrolytic silver recovery technique, which is advantageous from the viewpoint of cost of operation.

According to the invention there is provided a method of recovering silver from a spent photographic processing solution containing a thiosulfuric acid salt, comprising passing said spent photographic processing solution through a bipolar fixed-bed electrolytic cell having a pair of collector electrodes and between them a porous polarized electrode formed of an aggregate of conductive material, in which an electric current is passed through the cell to provide a current concentration in the bipolar fixed-bed electrolytic cell in the range from 1 to 100 A/l and a current density at the polarising electrode in the range from 1 to 100 A/dm$^2$, wherein the bipolar fixed-bed electrolytic cell is provided with at least one electrically insulating spacer having apertures whose porosity is 30 to 75 per cent in the cross-sectional direction with respect to the flow path of said spent photographic processing solution through the electrolytic cell.

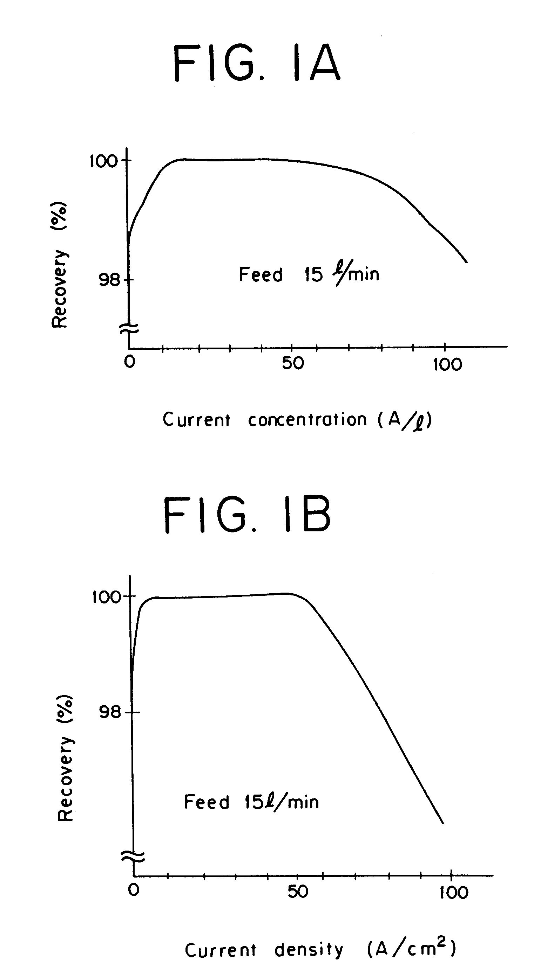

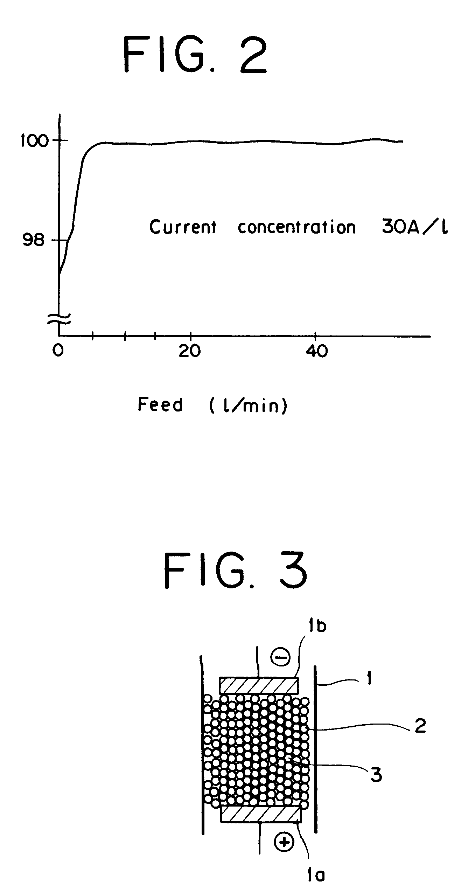

The method according to the invention constituted as above enables effective recovery of silver even from spent processing solutions having a silver content in a very low concentration, within the range for the above current concentration and current density as shown in the data in Fig. 1 and Fig. 2, obtained in an example of this invention.

5

EP 0 329 275 B1

## BRIEF DESCRIPTION OF THE DRAWINGS

Fig. 1A, Fig. 1B and Fig. 2 are graphic representations of silver recovery effect in Example 1 of this invention;

Fig. 3 is a schematic illustration of the structure of a bipolar fixed-bed electrolytic cell of a silver recovery apparatus used in Example 1;

Fig. 4A and 4B are explanatory views for the bipolar fixed-bed electrode;

Fig. 5 is a structural illustration of a bipolar fixed-bed electrolytic cell of a silver recovery apparatus used in Example 2;

Fig. 6 is a schematic illustration of an automatic processor;

Fig. 7 is a schematic illustration of the constitution of a silver recovery apparatus;

Fig. 8 illustrates the constitution of a bipolar fixed-bed electrolytic cell;

Fig. 9 is a schematic illustration of an electrode block;

Fig. 10 shows the relationship between an electrolytic current concentration and silver recovery;

Fig. 11 shows the relationship between an LHSV value and a silver recovery apparatus;

Fig. 12 shows the relationship between a porosity of an electrode block and a bath voltage;

Fig. 13 shows the relationship between a porosity of an spacer and a bath voltage;

Fig. 14 illustrates the constitution of another bipolar fixed-bed electrolytic cell;

Fig. 15 illustrates another electrode block;

Fig. 16 shows the relationship between a time elapsed in electrolysis and a silver recovery;

Fig. 17 illustrates the constitution of still another bipolar fixed-bed electrolytic cell; and

Fig. 18 shows a comparative example comparing a conventional electrolytic process.

## DESCRIPTION OF THE PREFERRED EMBODIMENTS

This invention will be described in detail below.

The electrode formed of an aggregate of a conductive material is meant to be an electrode, disposed between the collectors of an electrolytic cell, comprising a conductive material and used in a fixed state, specifically an electrode comprising a conductive material such as graphite and used in the form of particles, a honeycomb, a porous sheet or a sponge.

The electrolytic cell in which these electrodes are used is a bipolar fixed-bed electrolytic cell.

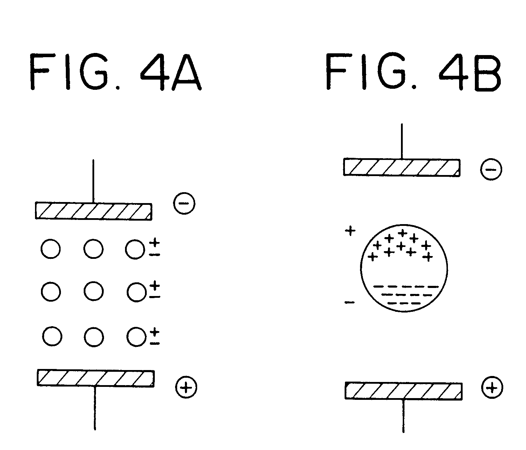

The bipolar fixed-bed electrolytic cell comprises an electrode, to be separately polarized, positioned between the collectors which are fixed. For example, as diagramatically illustrated in Fig. 4A, an electrode in the form of particles is packed bewteen the collectors, and once potential is applied between the collectors as shown in the figure, the electrode in the form of particles is polarized as illustrated in Fig. 4B, and serves as the electrode in an aggregated state as illustrated in Fig. 4A. This type of electrode is the bipolar type, and the electrode to be polarized in an electric field (hereinafter sometimes referred to as "polarized electrode") may have any desired form, but may preferably be in the form of the above-mentioned particles, or, a honeycomb structure, a porous sheet, a sponge (such as a sponge metal), a fibrous structure or a cottony structure. This is because it is desirable for a solution to sufficiently flow in the state that such a polarized electrode is positioned between the collectors.

The polarized electrode generally used comprises a material having corrosion resistance against an electrolytic solution, and may preferably include carbon materials, composite carbon materials, graphite materials, noble metals (such as platinum, palladium, iridium and ruthenium). The carbon materials include, for example, activated carbon, the composite carbon materials include, for example, a material obtained by mixing graphite powder and copper powder followed by pressure molding and firing, and the graphite materials include graphite commonly used. The electrode differs in the degree of polarization and also in the bath voltage when electrolysis is carried out, depending on the differences of these materials.

In this bipolar fixed-bed electrolytic cell, the electrode has a void of 30 to 55 per cent in the cross-sectional direction with respect to the flow path of a processing solution, thus enabling prevention of clogging.

In this invention, the surface of the electrode material is coated with a metallic catalyst, thereby making it possible to lower the bath voltage to accelerate the electrolytic reaction and also to prolong the life of the electrode materials such as the carbon materials, composite carbon materials and graphite materials. As the metallic catalyst, platinum group metals such as Pt, Ru, Pd and Ir can be used alone or in a composite form, or oxides or the like of these platinum group metals can be also used. The coating of the metallic catalyst may be carried out by various methods, but, in general, by electroplating using any of the electrode materials such as the carbon materials, composite carbon materials and graphite materials as the cathode.

6

Alternatively, it may be carried out by coating the electrode materials with an aqueous solution of a noble metal salt, followed by firing to provide a coating of a corresponding noble metal oxide. It may further be carried out by coating the electrode materials with an aqueous solution of a noble metal salt, followed by coating of an aqueous solution of a reducing agent, and then reducing the noble metal to provide a coating.

The effect obtainable on the electrolytic reaction by the coating of these metallic catalysts is substantially unchanged depending on the types of the catalysts so long as the noble metals are firmly attached to the electrode materials such as the carbon materials, composite carbon materials and graphite materials. The coating of the metallic catalysts may also be applied on the whole surface of the electrode materials, but may be satisfactory if it is applied only on the anodically polarized side at least.

In this invention, to make small the size of an apparatus, the distance between an anode and a cathode adjacent to each other in the polarized electrode of the bipolar fixed-bed electrolytic cell may preferably be made to be in the range of 5 mm or less (more than zero), and the thickness of the electrode may also preferably be made to be in the range of from 0.5 to 50 mm, but there are no particular limitations on these.

The space between the collectors between which the polarized electrode is positioned may preferably not so large so that a solution may sufficiently flow and the bath voltage may not become so large, and hence it is necessary to provide a diaphragm or the like serving as a spacer.

It is further preferable to give a sufficient turbulent flow to a solution so that a diffused double layer produced on the surface of the polarized electrode (the part at which the concentration gradient of silver abruptly drops in the vicinity of the electrode surface, where the extreme lowering of the silver density makes virtually difficult the recovery of silver by electrolysis) can be destroyed. For this purpose, it is preferable to use a pump or carry out stirring to increase the flow rate of the solution.

In this invention, the current concentration of the electrolytic cell is in the range of from 1 to 100 A/lit., preferably from 1 to 50 A/l, and further preferably from 10 to 50 A/l.

In this invention, the current density at the electrode of the electrolytic cell is in the range of from 1 to 100 A/dm$^2$, and preferably from 10 to 50 A/dm$^2$.

In the bipolar fixed-bed electrolytic cell of this invention, the polarized electrode may preferably be made to have its surface area as large as possible so far as the current concentration and current density required in this invention can be maintained.

In this invention, the current concentration in the bipolar fixed-bed electrolytic cell is set to a value ranging from 1 to 100 A/l, preferably from 1 to 50 A/l, and more preferably from 10 to 50 A/l.

The current concentration (sometimes referred to as electrolytic current concentration) is expressed by the equation:

Current concentration = electrolytic current value/electrolytic cell volume

and this current concentration may be set to a value within the above range, so that a high voltage can be applied to polarize the electrode and the silver present in a small amount and concentration can be recovered in a high efficiency and high recovery.

In this invention, an electrically insulating spacer having apertures is provided between electrodes so that the anode and cathode can be prevented from being shorted. This spacer may preferably be in the form of a network or threads, and there are no particular limitations on its number, but, similar to the porosity of the above (polarized) electrode, the spacer has a porosity or void of 30 to 75 % in the cross-sectional direction with respect to the flow path of a processing solution, thus enabling smooth flow of the processing solution. In addition, there are also no particular limitations on the thickness of the spacer, but preferred are spacers whose thickness is in the range of from 0.5 to 5 mm, since an excessively large thickness results in a large space between the anode and cathode to increase the voltage.

In this invention, the bipolar fixed-bed electrolytic cell may preferably have an LHSV value of 1h$^{-1}$ (1/HR) or less. This LHSV value is expressed by the equation:

LHSV value = flow rate of photographic processing solution/electrolytic cell volume.

This makes it possible to set to a small value the flow rate of the processing solution flowing through the bipolar fixed-bed electrolytic cell, and is effective for completely recovering the silver present in a small amount and concentration.

Such a bipolar fixed-bed electrolytic cell may be directly connected to a processing tank so that a overflown solution can be subjected to electrolytic treatment, or a processing solution continuously regenerated for the processing may be flowed therein.

In instances in which a bleach-fixing solution is regenerated and used, a filter tank and/or an ion exchange resin tank may preferably be provided posterior to the bipolar fixed-bed electrolytic cell, to enable removal of suspended matters and recovery of unnecessary ions.

In this invention, if the electrolysis of spent processing solutions containing a small amount of silver is carried out using the bipolar fixed-bed electrolytic cell, its electrode area can be greatly increased relative to the volume of the spent processing solution, as compared with conventional electrolytic processes. Moreover, it becomes possible to apply a very high electric field in the bipolar fixed-bed electrolytic cell, thereby diminishing the concentration gradient of silver in the vicinity of the bulk layer and electrode as compared with conventional electrolytic processes, so that the silver ion concentration can be decreased dramatically and in a short time, thus achieving the recovery of silver in a high efficiency and high recovery.

In the silver-recovering method and apparatus of this invention, where the spent processing solutions for light-sensitive silver halide photographic materials containing at least silver complex ions are subjected to electrolytic treatment with use of the bipolar fixed-bed electrolytic cell, the electrode area thereof can be greatly increased as compared with conventional electrolytic processes and moreover a very high electric field can be applied as a result, so that the recovery of silver can be carried out in a higher efficiency and higher recovery than the conventional electrolytic processes.

In this invention, it is preferred to use the carbon materials, composite carbon materials and graphite materials as the electrode material for the bipolar fixed-bed electrolytic cell, since the electrode can thereby be prevented from being attacked by spent processing solutions.

It is also preferred in this invention that the electrode structural material for the bipolar fixed-bed electrolytic cell comprises a material having a sheet-like structure and capable of passing spent processing solutions therethrough, and, for example, materials of honeycomb structure, perforated board structure, fibrous structure, cottony structure or particulate structure are used, since the spent processing solutions can thereby be smoothly flowed through the electrode.

It is also preferred in this invention that the distance between an anode and a cathode adjacent to each other in the polarized electrode of the bipolar fixed-bed electrolytic cell is made to be in the range of 5 mm or less (more than zero), since the apparatus can thereby be made small in size.

In this invention, the electrode may be coated with the metallic catalyst, and this metallic catalyst may comprise the platinum group metal or the oxide of platinum group metal, so that the electrolytic reaction can be accelerated and the life of the electrode materials such as the carbon materials, composite carbon materials and graphite materials can be prolonged.

In the bipolar fixed-bed electrolytic cell of this invention, in case of using conductive particles as the polarized electrode, particle size of the particles is not particularly limited, but preferably be in the range of from 0.01 to 60 mm, more preferably from 0.05 to 40 mm, and most preferably from 0.1 to 20 mm.

The solutions to be treated in this invention are spent photographic processing solutions, and they include any kind of solutions so long as they are those from which silver is to be recovered. This invention can be effectively used when the solutions to be treated are, for example, black-and-white developing solutions, color developing solutions, stabilizing solutions, and washing water. This is because such spent processing solutions contain a small amount of silver, and hence the effect of this invention that the silver can be recovered even from solutions containing silver in a very low concentration can be well exhibited.

The solutions to be treated may preferably be of pH 1 to 8. The pH may be adjusted to this range by adding acids, or a solution in an anode chamber surrounded with an ion exchange membrane or the like may be made to have such a pH. Particularly preferable for them is to be of pH 2 to 7.

Examples

Examples of this invention and comparative examples will be described below. As a matter of course, this invention is by no means limited only to Examples described below.

Prior to specific descriptions for the respective Examples, processing steps and changes in composition are beforehand described below in regard to the processing solutions whose spent solutions are used in experiments in each Example.

First, using an automatic processor RP-800 (manufactured by Konica Corporation) for MPS processing system paper, commercially available photographic paper (a product by Konica Corporation) was imagewise printed, and thereafter continuously processed according to the following processing steps and using the following processing solutions.

Standard processing steps:

| | | |
|---|---|---|
| (1) Color developing | 40°C | 3 min |
| (2) Bleach-fixing | 38°C | 1 min 30 sec |
| (3) Stabilizing | 25°C to 35°C | 3 min |
| (4) Drying | 75°C to 100°C | about 2 min |

Composition of processing solutions:

| [Color developing tank solution] | |
|---|---|
| Ethylene glycol | 15 ml |
| Potassium sulfite | 2.0 g |
| Potassium bromide | 1.3 g |
| Sodium chloride | 0.2 g |
| Potassium carbonate | 24.0 g |
| 3-Methyl-4-amino-N-ethyl-N-($\beta$-methanesulfonamidoethyl)aniline sulfate | 5.5 g |
| Brightening agent (a 4,4'-diaminostilbenedisulfonic acid derivative) | 1.0 g |
| Hydroxylamine sulfate | 3.0 g |
| 1-Hydroxyethylidene-1,1-diphosphonic acid | 0.4 g |
| Hydroxyethyliminodiacetic acid | 5.0 g |
| Magnesium chloride hexahydrate | 0.7 g |
| Disodium 1,2-dihydroxybenzene-3,5-disulfonate | 0.2 g |
| Made up to 1 liter by adding water, and adjusted to pH 10.20 with potassium hydroxide and sulfuric acid. | |

| [Color developing replenishing solution] | |
|---|---|
| Ethylene glycol | 20 ml |
| Potassium sulfite | 3.0 g |
| Potassium carbonate | 24.0 g |
| Hydroxylamine sulfate | 4.0 g |
| 3-Methyl-4-amino-N-ethyl-N-($\beta$-methanesulfonamidoethyl)aniline sulfate | 7.5 g |
| Brightening agent (a 4,4'-diaminostilbenedisulfonic acid derivative) | 2.5 g |
| 1-Hydroxyethylidene-1,1-diphosphonic acid | 0.5 g |
| Hydroxyethyliminodiacetic acid | 5.0 g |
| Magnesium chloride hexahydrate | 0.8 g |
| Disodium 1,2-dihydroxybenzene-3,5-disulfonate | 0.3 g |
| Made up to 1 liter by adding water, and adjusted to pH 10.70 with potassium hydroxide and sulfuric acid. | |

| [Bleach-fixing tank solution] | |
|---|---|
| Ferric ammonium ethylenediaminetetraacetate dihydrate | 60.0 g |
| Ethylenediaminetetraacetic acid | 3.0 g |
| Ammonium thiosulfate (an aqueous 70 % solution) | 100.0 ml |
| Ammonium sulfite (an aqueous 40 % solution) | 27.5 ml |
| Made up to 1 liter in total amount by adding water, and adjusted to pH 7.1 with potassium carbonate or glacial acetic acid. | |

| [Bleach-fixing replenishing solution A] | |
|---|---|
| Ferric ammonium ethylenediaminetetraacetate dihydrate<br>Potassium carbonate | 260.0 g<br>42.0 g |
| Made up to 1 liter in total amount by adding water. The pH of this solution is adjusted to 6.7 ± 0.1 using acetic acid or ammonia water. | |

| [Bleach-fixing replenishing solution B] | |
|---|---|
| Ammonium thiosulfate (an aqueous 70 % solution)<br>Ammonium sulfite (an aqueous 40 % solution)<br>Ethylenediaminetetraacetic acid<br>Glacial acetic acid | 250.0 ml<br>25.0 ml<br>17.0 g<br>85.0 ml |
| Made up to 1 liter in total amount by adding water. The pH of this solution is adjusted to 5.3 ± 0.1 using acetic acid or ammonia water. | |

| [Washing-substitutive stabilizing tank solution and replenishing solution] | |
|---|---|
| Ethylene glycol<br>2-Methyl-4-isothiazolin-3-on<br>1-Hydroxyethylidene-1,1-diphosphonate (an aqueous 60 % solution)<br>Ammonia water (an aqueous 25 % ammonium hydroxide solution) | 1.0 g<br>0.20 g<br>1.0 g<br>2.0 g |
| Made up to 1 liter with water, and adjusted to pH 7.0 with 50 % sulfuric acid. | |

The automatic processor was filled with the above color developing tank solution, bleach-fixing tank solution and stabilizing tank solution, and, while processing samples of the above commercially available color photographic paper, running tests were carried out while replenishing the above color developing replenishing solution, bleach-fixing replenishing solutions A and B, and stabilizing replenishing solution through bellows pumps. As to the amount for replenishment, the color developing tank was replenished with the color developing replenishing solution in an amount of 190 ml, the bleach-fixing tank was replenished with the bleach-fixing replenishing solutions A and B in an amount of 50 ml each, and the stabilizing tank was replenished with the washing-substitutive stabilizing replenishing solution in an amount of 250 ml, per 1 m² of the color photographic paper, respectively. The stabilizing tank of the automatic processor was so constructed that it comprise a first tank to third tank in the direction of the flow of samples, and took the multi-tank countercurrent system in which an overflown solution from the final tank is flowed into the tank anterior thereto, and this overflown solution is further flowed into the tank again anterior thereto.

The processing was continuously carried out until the total amount for the replenishment of the washing-substitutive stabilizing solution comes to be 3 times the capacity of the stabilizing tank.

Also, color negative films GX-100 (manufactured by Konica Corporation) were each exposed to light according to a conventional method, and continuously processed using an automatic processor which is a modification from a negative film processor NPS-FP34 (manufactured by Konica Corporation), and under development processing conditions as shown below.

| Processing step | Time min.sec. | Temp. (°C) | Tank capacity (lit.) | Amount for replenishment (ml/dm$^2$) |
|---|---|---|---|---|
| Color developing | 3'15" | 38±0.3 | 18 | 15 |
| Bleach-fixing (1st tank) | 2'00" | 38±0.3 | 15 | - |
| Bleach-fixing (2nd tank) | 2'00" | 38±0.3 | 15 | 10 |
| No-washing stabilizing (1st tank) | 1'00" | 38±0.3 | 9 | - |
| No-washing stabilizing (2nd tank) | 1'00" | 38±0.3 | 9 | 10 |
| Stabilizing | 40" | 38±0.3 | 9 | 10 |
| Drying | 1'30" | 38±0.3 | - | - |

A countercurrent (two-stage countercurrent) system was taken in the flow from the non-washing stabilizing (2nd tank) to the non-washing stabilizing (1st tank), and a countercurrent system was also taken on the bleach-fixing in the flow from the bleach-fixing (2nd tank) to the bleach-fixing (1st tank).

The amount of processing solutions brought into the tank anterior to each tank was 0.6 ml/dm$^2$.

The tank solutions and respective replenishing solutions were formulated as shown below.

| Color development tank solution: | |
|---|---|
| Potassium carbonate | 30 g |
| Sodium sulfite | 2.0 g |
| Hydroxylamine sulfate | 2.0 g |
| 1-Hydroxyethylidene-1,1-diphosphonic acid (an aqueous 60 % solution) | 1.0 g |
| Hydroxylethyliminodiacetic acid | 3.0 g |
| Magnesium chloride | 0.3 g |
| Potassium bromide | 1.2 g |
| Sodium hydroxide | 3.4 g |
| N-ethylene-N-$\beta$-hydroxyethyl-3-methyl-4-aminoaniline hydrochloride | 4.6 g |
| Made up to 1 liter by adding water, and adjusted to pH of 10.1 with sodium hydroxide. | |

| Color developing replenishing solution: | |
|---|---|
| Potassium carbonate | 40 g |
| Sodium sulfite | 3.0 g |
| Hydroxylamine sulfate | 3.0 g |
| Diethylenetriaminepentaacetic acid | 3.0 g |
| Potassium bromide | 0.9 g |
| Sodium hydroxide | 3.4 g |
| N-ethylene-N-$\beta$-hydroxyethyl-3-methyl-4-aminoaniline hydrochloride | 5.6 g |
| Made up to 1 liter by adding water, and adjusted to pH of 10.1 with sodium hydroxide. | |

| Bleach-fixing tank solution and replenishing solution: | |
|---|---|
| Ferric ammonium diethylenetriaminetetraacetate | 0.5 mol |
| Hydroxyethyliminodiacetic acid | 20 g |
| Ammonium thiosulfate (70 % wt/Vol) | 250 ml |
| Ammonium sulfite | 15 g |
| 2-Amino-5-mercapto-1,3,4-thiadiazole | 1.0 g |
| Ammonia water (28 %) | 20 ml |
| Made up to 1 liter by adding water, and adjusted to pH 7.6 with acetic acid and ammonia water. | |

| No-washing stabilizing tank solution and replenishing solution: | |
|---|---|
| 5-Chloro-2-methyl-4-isothiazolin-3-on | 0.01 g |
| 2-Methyl-4-isothiazolin-3-on | 0.01 g |
| Ethylene glycol | 1 g |
| Ferric ammonium diethylenetriaminetetraacetate | 5 g |
| Made up to 1 liter by use of water, and adjusted to pH 10.0 with ammonium hydroxide and sulfuric acid. | |

| Stabilizing tank solution and replenishing solution: | |
|---|---|
| Formalin (an aqueous 37 % solution) | 3 ml |
| Konidax (available from Konica Corporation) | 5 ml |
| Made up to 1 liter by adding water. | |

Processing was continuously carried out until the amount for the replenishment of color developing solution comes to be 3 times the capacity of the color developing solution tank.

Example 1

In the present example, a bipolar fixed-bed electrode as described below was used.

Namely, using graphite particles of 10 mm in diameter as the polarized electrode, and, in a cylindrical member of 200 mm in diameter and 200 mm in height, said graphite particles, and glass beads of 10 mm in diameter, were packed in a volume ratio of about 1 : 1, and perforated boards (diameter: 190 mm; thickness: 10 mm) made of graphite and having a porosity of 55 % were fitted to the top and the bottom, which perforated boards were made to respectively serve as the anode and cathode. Used as the perforated boards made of graphite were those having a hole size (in diameter) of 6 mm.

Fig. 3 schematically illustrates the structure of this bipolar fixed-bed electrode. In Fig. 3, the numeral 1 denotes the cylindrical member; 1a and 1b, the anode and cathode, respectively; 2, packed graphite particles serving as the electrode; 3, insulating material glass beads packed together with the graphite particles.

The spent processing solution, i.e., the solution to be treated, was the above spent stabilizing processing solution for color negatives or color photographic paper, having a silver concentration of 100 mg/l before electrolysis.

Using this electrolytic cell, experiments were carried out to examine how silver recoveries turn with changes of current concentration at a feed which was set to 15 l/min. The graph in Fig. 1A shows the results obtained. As shown in Fig. 1A, the silver is recovered at a recovery of 99 % or more when the current concentration is in the range of from 1 to 100 A/l. When it exceeds 100 A/l, there is seen a tendency of an abrupt lowering of the recovery. Though not necessarily clearly seen in Fig. 1, no sufficient electrolysis recovery efficiency can be obtained when it is less than 1 A/l. Fig. 1A tells that a more preferably recovery can be obtained when the current concentration is in the range of from 10 to 80 A/l and, in particular, a recovery of nearly 100 % can be obtained when it is in the range of 10 to 50 A/l.

Similarly the graph in Fig. 1B shows the results obtained when the feed was set to 15 l/min and the current density was varied to examine changes in the silver recovery. Fig. 1B tells that a good recovery can be obtained when the current density is in the range of from 1 to 100 A/dm$^2$ and, in particular, more preferable results can be obtained when it is in the range of from 10 to 50 A/dm$^2$.

Fig. 2 shows the results obtained when the current concentration was fixed to 30 A/l and the solution feed was varied to test the silver recovery. This current concentration corresponds to the current concentration range preferred in this invention, and in this instance, Fig. 2 tells that substantially a 100 % silver recovery can be achieved at a feed of about 5 l/min or more and thus substantially a complete silver recovery can be made over a wide range of the solution feed.

Example 2

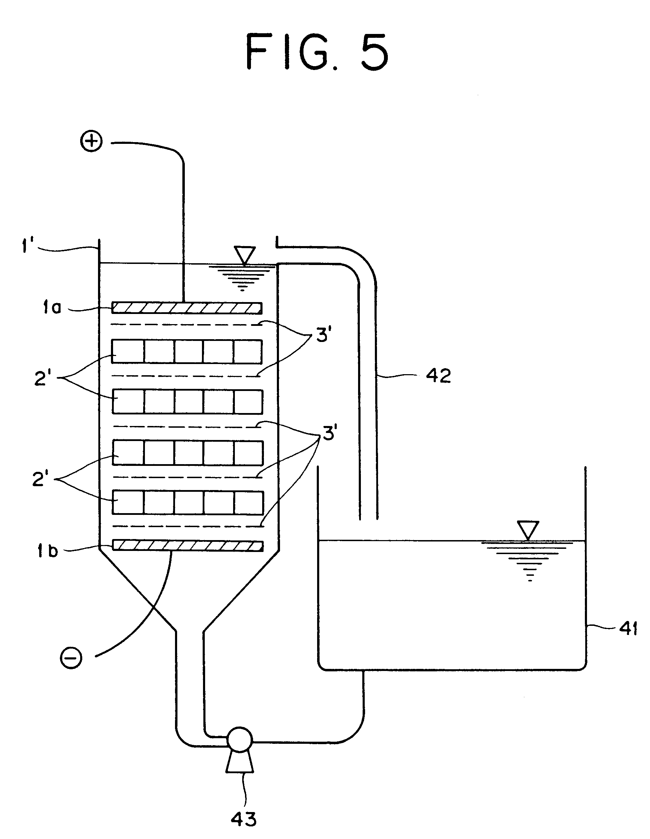

In the present Example, a bipolar fixed-bed electrolytic cell constructed as illustrated in Fig. 5 was used.

In Fig. 5, the numerals 1a and 1b denote the anode and cathode, respectively, and those made of porous activated carbon were used in the present Example. The numeral 2′ denotes honeycomb activated carbon electrodes serving as the polarized electrode. The honeycomb activated carbon electrode 2′ has a flat board multi-chamber structure comprising chambers each partitioned into a tetragon (a hexagon or other forms may also be available). Structures like this are positioned between the anode and cathode 1a, 1b (four sets in Fig. 5). This each honeycomb activated carbon electrode 2′ is polarized to constitute a bipolar structure and also take the honeycomb structure, thereby achieving a good flow of the solution. In Fig. 5, the numeral 3′ denotes nets made of plastics, which are positioned between the plural honeycomb electrodes 2′ to function as insulating spacers and also smoothen the solution flow.

The numeral 1′ denotes an outer frame member of the electrolytic cell; 42, a pipe. The solution overflowed from the electrolytic cell passes this pipe and stocked in a spent processing solution stock tank 41. The numeral 43 denotes a pump, which flows the spent processing solution circulatively.

In the present Example, experiments were carried out in the same manner as in Example 1 to obtain like results.

Example 3.

Another example of this invention will be described below. The accompanying drawings are used to illustrate this invention, and by no means limit this invention.

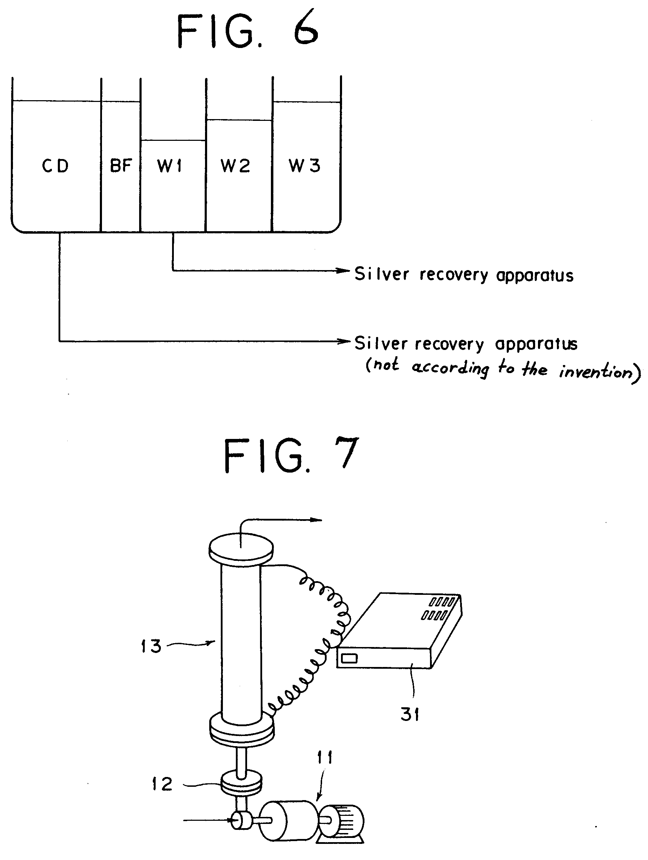

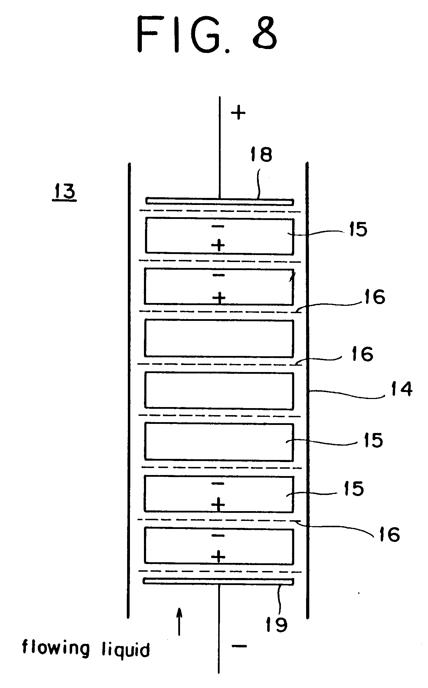

Fig. 6 diagramatically illustrates an automatic processor. This automatic processor is for use in processing light-sensitive color photographic materials, and provided with the steps of color developing CD, bleach-fixing BF, first washing W1, second washing W2, and third washing W3. In the bleach-fixing BE step, silver halide in light-sensitive photographic materials is dissolved out owing to silver halide solubilizing agents such as thiosulfate and thiocyanate, so that silver complex ions are greatly accumulated in the processing solution with progress of the processing. In other steps, as in the color developing CD step, silver complex ions are accumulated with progress of the processing, since silver halide solubilizing agents such as sulfite ions and thiocyanate ions are added like in the bleach-fixing BE step, or since these silver complex ions are contained in or adhered to the light-sensitive photographic materials and flowed in. The apparatus of this invention for recovering silver from photographic processing solutions is each connected to the first washing W1 step.

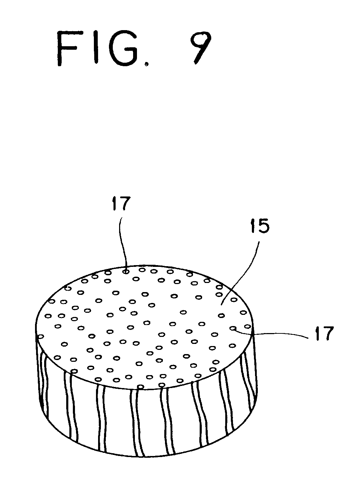

Fig. 7 to Fig. 9 illustrate the constitution of the apparatus of this invention for recovering silver from spent processing solutions. As illustrated in Fig. 7, the spent processing solution flowed in from an automatic processor is fed to a bipolar fixed-bed electrolytic cell 13 through a filter 12 by driving a pump 11. To this bipolar fixed-bed electrolytic cell 13, a given direct-current voltage is applied from a rectifier 31 connected to a commercial electric source, and this bipolar fixed-bed electrolytic cell 13 performs the recovery of silver. The solution thus treated is discharged from an outlet, and fed back to the automatic processor or thrown away.

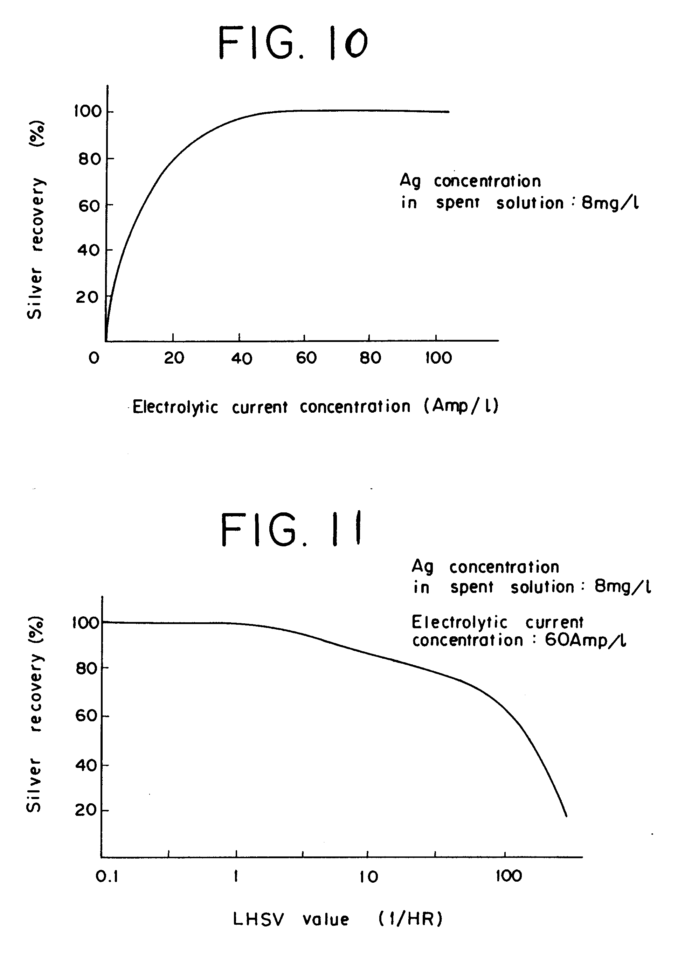

This bipolar fixed-bed electrolytic cell 13 is constituted as illustrated in Fig. 8. In Fig. 8, the numeral 14 denotes a pipe made of vinyl chloride, where a pipe of 7 cm in diameter and 15 cm in length is used, and seven pieces of electrode block 15 are placed layer upon layer in this pipe 14, holding a spacer 16 therebetween.

As illustrated in Fig. 9, this electrode block 15 to be used comprises a graphite board of 6.8 cm in diameter and 1 cm in thickness, provided with holes 17 of 5 mm in diameter with a porosity of 45 %. This electrode block 15 is coated with platinum oxide on its anode side. The spacer 16 to be used comprises a 50 mesh net made of PE.

On both ends of the layered electrode portion, a mesh-like DSE anode 18 and a mesh-like titanium cathode 19 are provided as electrodes for electrification.

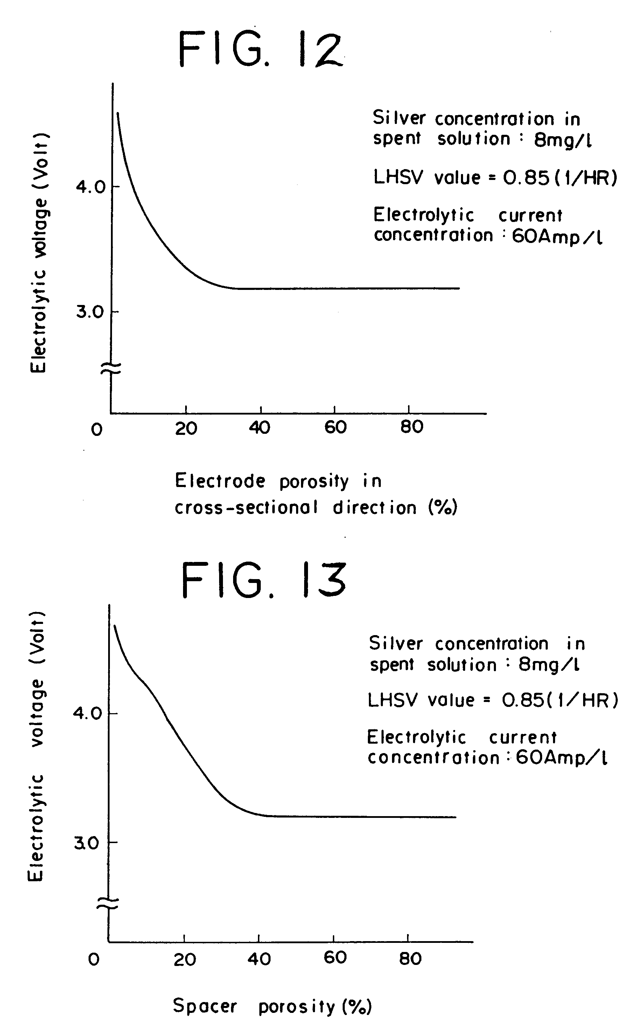

In the present embodiment, the electrolytic current concentration may preferably be 50 A/lit as shown in Fig. 10. The LHSV value may also preferably be $1h^{-1}$ [1/HR] or less as shown in Fig. 11. Further, the porosity of the electrode block may preferably be 30 % or more as shown in Fig. 12 and the porosity of the spacer 16 may also preferably be 30 % or more as shown in Fig. 13. The apparauts can be operated at a high efficiency and high silver recovery under these conditions.

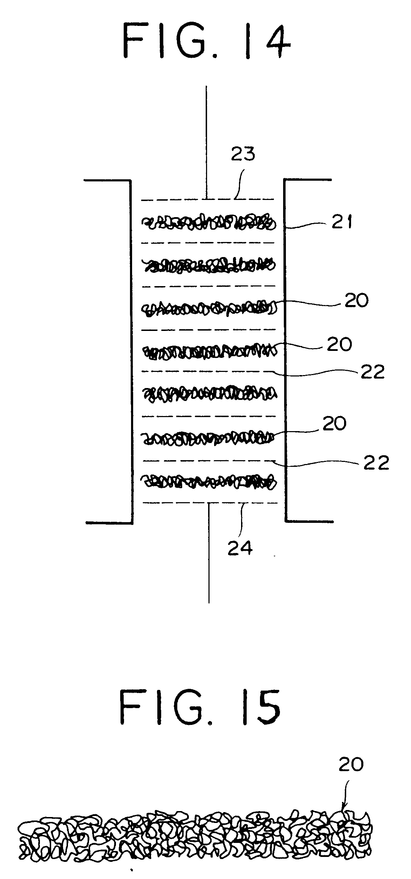

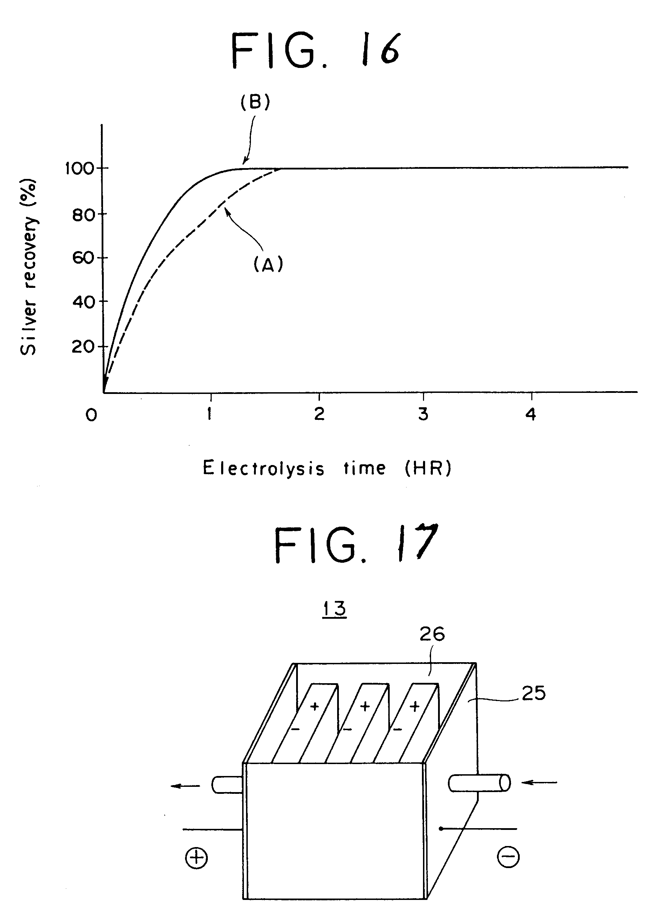

Fig. 14 and Fig. 15 illustrate another embodiment of the bipolar fixed-bed electrolytic cell 13.

In this embodiment, as illustrated in Fig. 15, carbon fiber (line diameter 0.5 mm x length 20 mm or more) to be placed layer upon layer is used as an electrode block 20. The reverse side (the side anodically polarized) of this electrode block 20 is coated with an aqueous solution of 0.5 mol/l of palladium nitrate, followed by drying at 90°C for 30 minutes and thereafter baking at 350°C for 30 minutes. This operation was repeated three times to prepare the electrode.

Seven pieces of electrode block 20 were prepared, and placed layer upon layer in a pipe 21 made of vinyl chloride and having a diameter of 60 mm and a length of 100 mm, with alternate insertion of a spacer 22 (a 50 mesh net made of PE).

The anode and cathode 23, 24 like those previously described were provided on both ends of this pipe 21, and the inside carbon fiber layered electrode was polarized, thus constructing the bipolar fixed-bed electrolytic cell 13.

Fig. 16 shows the silver recoveries according to (A) the embodiment illustrated in Fig. 8 and Fig. 9 and (B) the embodiment illustrated in Fig. 14 and Fig. 15.

In both the embodiments, the silver concentration in the spent processing solution was 8 mg/l, and the electrolytic current density and LHSV value were set to 60 A/l and $0.85h^{-1}$ [1/HR], respectively, to make treatment under the same conditions except the above.

As a result, the embodiment in which the carbon fiber was used in the electrode block 20 resulted in a little better silver recovery than the embodiment in which the graphite board was used in the electrode block 15, but it was possible in both of them to achieve 100 % silver recovery in an electrolysis time of about 1 to 2 hours.

As illustrated in Fig. 17, the bipolar fixed-bed electrolytic cell 13 may also comprise a box 24 in which an electrode block 25 formed into a square board is disposed by placing it layer upon layer in the same manner as previously described.

An operation according to the present Example will be described below together with comparative examples.

The following processing solutions were used in the present Example.

| [Bleach-fixing solution] | |
| --- | --- |
| Water | 380 ml |
| Ethylenediaminetetraacetic acid | 10 g |
| Ferric ethylenediaminetetraacetate | 60 g |
| Sodium sulfite | 10 g |
| Ammonium hydroxide (an aqueous 28 % solution) | 4 g |
| Ammonium thiosulfate (an aqueous 60 % solution) | 120 g |

The following color developing solution (500 ml) was added.

| [Color developing solution] | |
| --- | --- |
| Water | 700 ml |
| Potassium sulfurous anhydride | 1.0 g |
| Kodak CD-3 | 5.0 g |
| Benzyl alcohol | 14.0 g |
| Hydroxylamine sulfate | 2.0 g |
| Potassium bromide | 1.2 g |
| By adding water to make 1 lit. pH = 10.15 ± 0.1 | |

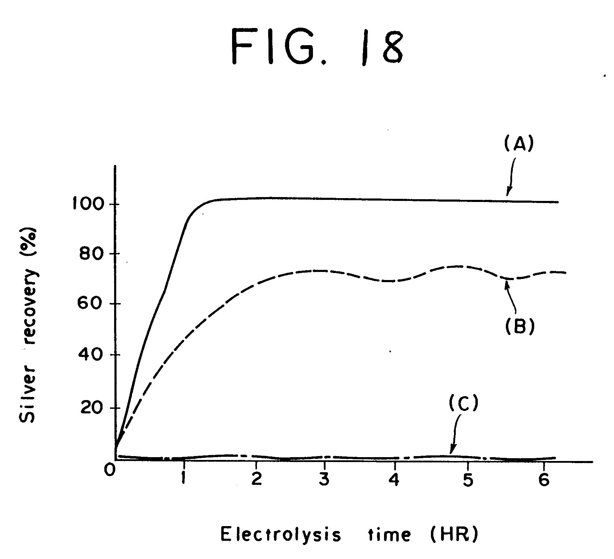

The solution was adjusted to pH 7.2 with ammonium hydroxide and acetic acid. The resulting bleach-fixing solution was fatigued by processing commercially available color printing papers, in which the bleach-fixing processing was carried out immediately after the developing processing, until the solution contain 3.9 g/lit of silver. Using 1.5 lit. of this solution, the electrolytic process according to comparative examples and electrolytic process according to the present Example, as described below, were carried out to obtain the results as shown in Fig. 18, in which (A) is in accordance with the bipolar fixed-bed electrolytic cell of this invention, (B), a monopolar fluidized-bed electrolytic cell and (C), comparative example.

The apparatus as shown in Fig. 7 to Fig. 9 was used in the bipolar fixed-bed electrolytic cell. The processing solution contained silver in concentration of 8 mg/lit, the bipolar fixed-bed electrolytic cell was constituted as previously described, the electrolytic current concentration was 60 A/lit, the LHSV value was 0.85 [1/HR], the electrode sectional porosity was 45 %, and the spacer porosity was 75 %. Silver can be recovered approximate 100 % as shown in Fig. 18.

14

As comparative example, using a flat board electrolytic cell, current density was varied from 0.1 up to 20 A/dm$^2$ to examine the recovery of silver, but the silver contained in a concentration of 8 mg/l was unable to be recovered at all. SUS 304 board was used as a cathode board.

## Claims

1. A method of recovering silver from a spent photographic processing solution containing a thiosulfuric acid salt, comprising passing said spent photographic processing solution through a bipolar fixed-bed electrolytic cell having a pair of collector electrodes and between them a porous polarized electrode formed of an aggregate of conductive material, in which an electric current is passed through the cell to provide a current concentration in the bipolar fixed-bed electrolytic cell in the range from 1 to 100 A/l and a current density at the polarising electrode in the range from 1 to 100 A/dm$^2$, wherein the bipolar fixed-bed electrolytic cell is provided with at least one electrically insulating spacer having apertures whose porosity is 30 to 75 per cent in the cross-sectional direction with respect to the flow path of said spent photographic processing solution through the electrolytic cell.

2. The method according to Claim 1, wherein the current concentration is made to be in the range from 1 to 50 A/l.

3. The method according to Claim 2, wherein the current concentration is made to be in the range from 10 to 50 A/l.

4. The method according to Claim 1, wherein the current density is made to be in the range from 10 to 50 A/dm$^2$.

5. The method according to Claim 1, wherein the distance between an anode and a cathode adjacent to each other in the porous polarized electrode of the bipolar fixed-bed electrolytic cell is greater than zero and less than 5 mm.

6. The method according to Claim 1, wherein the thickness of the electrode of the bipolar fixed-bed electrolytic cell is made to be in the range from 0,5 to 5 mm.

7. The method according to Claim 1, wherein the porosity of the polarized electrode of the bipolar fixed-bed electrolytic cell is in the range 30 to 55 per cent.

8. The method according to Claim 1, wherein the electrode of the bipolar fixed-bed electrolytic cell is made of at least one material selected from the group consisting of carbon materials, composite carbon materials, graphite materials and noble metals.

## Patentansprüche

1. Verfahren zur Rückgewinnung von Silber aus verbrauchter, ein Thioschwefelsäuresalz enthaltender photographischer Verarbeitungslösung, das die folgenden Schritte umfaßt:
   Durchleiten der verbrauchten photographischen Verarbeitungslösung durch eine bipolare Festbett-Elektrolysezelle, die ein Paar Kollektorelektroden und eine dazwischenliegende poröse, polarisierte Elektrode aus einem zusammengesetzten leitfähigen Material aufweist, wobei zur Bereitstellung einer Stromkonzentration in der bipolaren Festbett-Elektrolysezelle im Bereich von 1 und 100 A/l und einer Stromdichte an der polarisierenden Elektrode im Bereich von 1 bis 100 A/dm$^2$ ein elektrischer Strom durch die Zelle geleitet wird, worin die bipolare Festbett-Elektrolysezelle mit mindestens einem elektrisch isolierenden Abstandshalter versehen ist, der Öffnungen aufweist, deren Porosität in Querschnittsrichtung bezüglich des Fließweges der verbrauchten Verarbeitungslösung durch die Elektrolysezelle 30 bis 75 Prozent beträgt.

2. Verfahren nach Anspruch 1, worin die Stromkonzentration so eingestellt wird, daß sie im Bereich von 1 bis 50 A/l liegt.

3. Verfahren nach Anspruch 1, worin die Stromkonzentration so eingestellt wird, daß sie im Bereich von 10 bis 50 A/l liegt.

**4.** Verfahren nach Anspruch 1, worin die Stromdichte so eingestellt wird, daß sie im Bereich von 10 bis 50 A/dm$^2$ liegt.

**5.** Verfahren nach Anspruch 1, worin der Abstand zwischen benachbarter Anode und Kathode in der porösen polarisierten Elektrode der bipolaren Festbett-Elektrolysezelle größer als Null und kleiner als 5 mm ist.

**6.** Verfahren nach Anspruch 1, worin die Elektrodendicke der bipolaren Festbett-Elektrolysezelle so eingestellt wird, daß sie im Bereich von 0,5 bis 5 mm liegt.

**7.** Verfahren nach Anspruch 1, worin die Porosität der polarisierten Elektrode der bipolaren Festbett-Elektrolysezelle im Bereich von 30 bis 55 Prozent liegt.

**8.** Verfahren nach Anspruch 1, worin die Elektrode der bipolaren Festbett-Elektrolysezelle aus mindestens einem Material, ausgewählt aus der Gruppe Kohlenstoffmaterialien, Verbundkohlenstoffmaterialien, Graphitmaterialien und Edelmetalle, gefertigt ist.

**Revendications**

**1.** Procédé de récupération d'argent à partir d'une solution de traitement photographique usée contenant un sel d'acide thiosulfurique, comprenant le passage de ladite solution de traitement photographique usée à travers une cellule électrolytique à lit fixe bipolaire comportant une paire d'électrodes collectrices et, entre les deux, une électrode polarisée poreuse formée d'un agrégat de matériau conducteur, dans laquelle on fait passer un courant électrique à travers la cellule pour obtenir une concentration de courant dans la cellule électrolytique à lit fixe bipolaire dans la gamme de 1 à 100 A/l et une densité de courant au niveau de l'électrode de polarisation dans la gamme de 1 à 100 A/dm$^2$, dans lequel la cellule électrolytique à lit fixe bipolaire est munie d'au moins un espaceur isolant électrique comportant des ouvertures, dont la porosité est de 30 à 75 pourcent dans la direction de la section droite, par rapport au trajet de circulation de ladite solution de traitement photographique usée à travers la cellule électrolytique.

**2.** Procédé selon la revendication 1, dans lequel la concentration du courant est ajustée dans la gamme de 1 à 50 A/l.

**3.** Procédé selon la revendication 2, dans lequel la concentration du courant est ajustée dans la gamme de 10 à 50 A/l.

**4.** Procédé selon la revendication 1, dans lequel la densité de courant est ajustée dans la gamme de 10 à 50 A/dm$^2$.

**5.** Procédé selon la revendication 1, dans lequel la distance entre une anode et une cathode adjacentes l'une à l'autre dans l'électrode polarisée poreuse de la cellule électrolytique à lit fixe bipolaire est supérieure à zéro et inférieure à 5 mm.

**6.** Procédé selon la revendication 1, dans lequel l'épaisseur de l'électrode de la cellule électrolytique à lit fixe bipolaire est ajustée dans la gamme de 0,5 à 5 mm.

**7.** Procédé selon la revendication 1, dans lequel la porosité de l'électrode polarisée de la cellule électrolytique à lit fixe bipolaire est dans la gamme de 30 à 55 pourcent.

**8.** Procédé selon la revendication 1, dans lequel l'électrode de la cellule électrolytique à lit fixe bipolaire est faite d'au moins un matériau choisi dans le groupe constitué par les matériaux carbonés, les matériaux carbonés composites, les matériaux de graphite et les métaux nobles.

# FIG. IA

Recovery (%)

100

98

Feed 15 ℓ/min

0    50    100

Current concentration (A/ℓ)

# FIG. IB

Recovery (%)

100

98

Feed 15ℓ/min

0    50    100

Current density (A/cm²)

# FIG. 2

Current concentration 30A/ℓ

Feed (ℓ/min)

# FIG. 3

# FIG. 4A

# FIG. 4B

# FIG. 5

# FIG. 6

CD | BF | W1 | W2 | W3

→ Silver recovery apparatus

→ Silver recovery apparatus
(not according to the invention)

# FIG. 7

13

31

12

11

# FIG. 8

flowing liquid

# FIG. 9

# FIG. 10

Ag concentration
in spent solution : 8mg/l

Electrolytic current concentration (Amp/l)

# FIG. 11

Ag concentration
in spent solution : 8mg/l

Electrolytic current
concentration : 60Amp/l

LHSV value (1/HR)

# FIG. 12

Silver concentration in
spent solution : 8mg/l

LHSV value = 0.85 (1/HR)

Electrolytic current
concentration : 60Amp/l

Electrode porosity in
cross-sectional direction (%)

# FIG. 13

Silver concentration in
spent solution : 8mg/l

LHSV value = 0.85(1/HR)

Electrolytic current
concentration : 60Amp/l

Spacer porosity (%)

25

# FIG. 14

# FIG. 15

# FIG. 16

# FIG. 17

# FIG. 18